# EUROPÄISCHE PATENTSCHRIFT

(11) **EP 1 306 283 B1**
(45) Veröffentlichungstag und Bekanntmachung des Hinweises auf die Patenterteilung: **19.05.2004**
(21) Anmeldenummer: 02020844.3
(22) Anmeldetag: 18.09.2002
(51) Int. Cl.: B61L 15/00

(54) **Verfahren zum Betreiben eines Kommunikationsystems für Züge**
Method for operating a communiction system for trains
Procédé de fonctionnement d'un système de communication pour trains

(30) Priorität: 26.10.2001 DE 10152965
(43) Veröffentlichungstag der Anmeldung: 02.05.2003
(73) Patentinhaber: DB Regio AG, 60326 Frankfurt (DE); DB Reise & Touristik AG, 60326 Frankfurt (DE)
(72) Erfinder: Witte, Stefan, Dr., 32425 Minden (DE); Minde, Frank, 31688 Nienstädt (DE)
(74) Vertreter: Zinken-Sommer, Rainer

(56) Entgegenhaltungen:
- EP-A- 1 013 533
- ZUR BONSEN G A: "The Multifunction Vehicle Bus (MVB)" FACTORY COMMUNICATION SYSTEMS, 1995. WFCS '95, PROCEEDINGS., 1995 IEEE INTERNATIONAL WORKSHOP ON LEYSIN, SWITZERLAND 4-6 OCT. 1995, NEW YORK, NY, USA,IEEE, US, 4. Oktober 1995 (1995-10-04), Seiten 27-34, XP010154281 ISBN: 0-7803-3059-5
- NIEVA T ET AL: "Jini technology applied to railway systems" INTERNATIONAL SYMPOSIUM ON DISTRIBUTED OBJECTS AND APPLICATIONS, PROCEEDINGS DOA'00, 21. - 23. September 2000, Seiten 251-259, XP010514377 Antwerp, Belgium

## Beschreibung

Die Erfindung betrifft ein Verfahren zum Betreiben eines Kommunikationssystems für Züge. Sie ist dafür bestimmt, in einem Zug ein Zugbussystem für Steuerungsfunktionen verfügbar zu machen als auch ein Zugbussystem für Informationsdienste, wobei über beide Zugbussysteme gleichermaßen eine wagenspezifische Adressierung möglich ist.

Zeitgemäße Kommunikationssysteme in Zügen sind durch das Vorhandensein von Zugbussystemen bestimmt. Die Kommunikation insbesondere mit dem Ziel des Austausches von Daten, Informationen, Steueranweisungen und Stellanforderungen erfolgt dabei sowohl zwischen den Fahrzeugen des Zuges als auch innerhalb der Fahrzeuge selbst. Für den reibungslosen Ablauf des Datenaustausches zwischen den auf den Wagen sowie auf dem Triebfahrzeug angeordneten Rechnerknoten sind diese jeweils über sogenannte Gateways an den durchgehenden Zugbus angeschlossen.

Für die Verwendung in Zugbussystemen sind verschiedene Lösungen und Spezifikationen bekannt. Hierzu zählt der WTB (ein dem UIC-Standard 556 entsprechender Wire-Train-Bus), das <EBAS>- System, das auf einer CAN (Controller Area Network) - Kommunikation basiert, wie auch andere draht- oder funkbasierte Lösungen. Ein wesentliches Kennzeichen bekannter Zugbustechnologien ist es, dass diese bislang primär für Steuerungsaufgaben in den Zügen vorgesehen sind. Aus diesem Grund verfügen sie über die besondere Eigenschaft einer Erkennung von darin eingestellten Wagen und deren Einstellrichtung. Der zugehörige Prozess, im dessen Verlauf diese Informationen erstellt werden, ist die sogenannte Zugtaufe. Lösungen für zugehörige Verfahren und Anordnungen sind beispielsweise aus DE 196 24 777, DE 199 29 644, DE 198 58 922 oder DE 198 56 540 bekannt. Die Zugtaufe ist eine zwingende Voraussetzung für eine korrekte wagenselektive Adressierung der den Wagen zugeordneten Rechnerknoten und daher für einen ordnungsgemäßen Ablauf des sich anschließenden Datenverkehrs.

Die in der Zugtaufe gewonnene Adressierung gilt jeweils nur für eine aktuelle Zugzusammensetzung und trägt daher dynamischen Charakter. Da als wesentliche Aufgaben an bekannte Zugbussysteme insbesondere solche Steuerungsfunktionen wie Traktionssteuerung, Bremsensteuerung, selektive Entladung oder ein Austausch spezifischer Fahrzeug- oder Ladungsdaten gelten, ist der Umfang der zu übertragenden Datenraten eher begrenzt. Dagegen stehen andere Aspekte, wie Sicherheitsanforderungen und Echtzeitfähigkeit der Datenübertragung, im Vordergrund.

Neben diesen Zugbussystemen, die für spezielle Steuerungsaufgaben zugeschnitten wurden, sind Datenübertragungssysteme für einen allgemeinen rechnerübergreifenden Informationsaustausch bekannt. Ein typisches Anwendungsgebiet hierfür ist insbesondere die kommerzielle Netzwerktechnologie. Für das Internet findet beispielsweise die netzwerkunabhängige TCP/IP- Protokollfamilie breite Anwendung.

Um die Vorteile eines Einsatzes dieser bewährten, in vielfältiger Weise kompatiblen wie auch preisgünstigen Lösungen auch auf Anwendungen in Zügen übertragen zu können, bietet sich diese Technik für spezifische Aufgaben in dortigen Kommunikationssystemen an. Im Besonderen sind dies Anwendungen für Fahrgastinformationssysteme, zur Fahrgastunterhaltung, für Platzreservierungen oder auch für eine zukünftige Internetanbindung.

Solcherart Informationssysteme müssen sicherheitsrelevante Anforderungen der Steuerungszugbussysteme und eine Echtzeitfähigkeit nicht zwingend erfüllen, genügen aber weit besser dem Erfordernis nach hohen Datendurchsatzraten. Für auf dieser Basis erstellte Informationszugbussysteme ist es jedoch e-benfalls erforderlich, diese so zu gestalten, dass ein wagenspezifischer Zugriff auf dort installierte Rechnerknoten gewährleistet ist. Das heißt, eine Vergabe von Adressen für die einzelnen Rechnerknoten (IP-Adressen) muss unter Bezugnahme auf die Zugehörigkeit zu einem bestimmten Wagen erfolgen. Handelt es sich bei dem betrachteten Informationszugbussystem um einen statischen Zugverband, der in seiner Aneinanderreihung nicht variiert wird, so wäre eine feste Vorgabe wagenbezogener Adressen mit vertretbarem Aufwand lösbar. Sollen jedoch Züge mit Informationszugbussystemen ausgerüstet werden, die fortlaufenden Änderungen in ihrer Zusammensetzung unterliegen, so muss auch eine dynamische Zuordnung eines jeweiligen Rechnerknotens ermöglicht werden.

Der Erfindung liegt daher die Aufgabe zugrunde, ein Verfahren zum Betreiben eines Kommunikationssystems für Züge zu schaffen, das als optimiertes Zugbussystem für Steuerungsfunktionen (Steuerungszugbussystem) verfügbar ist, wie auch als ein optimiertes Zugbussystem für Informationsdienste (Informationszugbussystem), wobei über beide Zugbussysteme gleichermaßen eine wagenspezifische Adressierung von Rechnerknoten möglich sein soll.

Diese Aufgabe wird in Verbindung mit dem Oberbegriff des Hauptanspruches erfindungsgemäß gelöst, indem an einem Steuerungszugbussystem eine Zügtaufe durchgeführt wird, aus der eine Zusammensetzung in Bezug auf eine An-zahl, eine Reihenfolge und eine Einstellrichtung von Wagen und mit diesen Wagen fest verbundenen Rechnerknoten des Steuerungszugbussystems hervorgeht, und dass die solcherart ermittelten Informationen über die Zusammensetzung der Wagen an ein Informationszugbussystem weitergegeben werden und an diesem zu einer Bildung von dynamisch modifizierten Adressen für die ebenfalls fest mit den Wagen verbundenen Rechnerknoten des Informationssystems genutzt werden.

Nach einer besonders zweckmäßigen Ausgestaltungsform der Erfindung beruht das Informationszugbussystem auf einer Verwendung der TCP/IP-Technologie, wobei eine wagenselektive Adressierung dadurch erreicht wird, dass mit den vom Steuerungszugbussystem gelieferten Informationen über die Zusammensetzung der Wagen die IP-Adressen der Rechnerknoten des Informationssystems wagenpositionsabhängig gebildet werden.

Nach einer weiteren vorteilhaften Ausgestaltungsform der Erfindung werden die IP-Adressen der Rechnerknoten des Informationssystems zusammen mit den aus der Zugtaufe erhaltenen Informationen über die Zusammensetzung der Wagen in einer Datenbasis zur Zugkonfiguration aufgenommen.

Die wesentlichen Vorteile der Erfindung bestehen darin, dass die Datenübertragung über ein Zugbussystem zur Ausführung von Steuerungs- und Regelfunktionen vollkommen getrennt erfolgt von einer Übertragung von Daten für andere Informationsaufgaben, wodurch der Sicherheitsaspekt wesentlich erhöht wird. Weiterhin können für die Informationsübertragung gängige kommerzielle Systeme eingesetzt werden, die über die erfindungsgemäße Modifizierung der Adressen hinaus keine bahnspezifischen Entwicklungen bedingen und dennoch jederzeit eine wagenselektive Übertragung von Informationen ermöglichen. Damit steht das vielfältige Angebot kostengünstiger Lösungen für die unterschiedlichsten Anwendungen bis hin zur Anbindung von Internet-Zugängen zur Verfügung.
Ein Ausführungsbeispiel der Erfindung wird im folgenden näher erläutert.

In einem Zug befinden sich zwei Kommunikationsnetze in Form von zwei Zugbussystemen. Ein erstes Zugbussystem ist als Steuerungszugbussystem ausgelegt und ist mit Funktionen zur Ausführung einer Zugtaufe für die Gewinnung von Informationen über die Zugzusammensetzung sowie von wagenspezifischen Daten ausgestattet. Ein über das Steuerungszugbussystem kommunizierendes Steuerungssystem wird für Steuerungs- und Regelfunktionen im Zug verwendet, insbesondere für eine Traktionssteuerung und für eine elektronische Ansteuerung von wagen- und triebfahrzeugseitig installierten Bremsen. Aus der Zugtaufe gehen Ordnungsnummern über die spezifische Wagenreihung hervor. Diese Ordnungsnummern werden einer Datenbasis auf einem Server des Triebfahrzeuges zugeordnet, in der außerdem weitere Daten über die Zugzusammensetzung sowie wagenbezogene Informationen abgelegt sind. Die aus der Zugtaufe ermittelten Ordnungsnummern werden für die wagenspezifische Adressierung von Datenübertragungen auf dem Steuerungszugbussystem verwendet.

Ein zweites Zugbussystem ist als Informationszugbussystem auf der Basis eines TCP/IP-Netzwerkes aufgebaut, das ebenfalls über einen zentralen Server auf dem Triebfahrzeug betrieben wird. Über Gateways sind die Rechnerknoten des Informationssystems wagenweise an das Informationszugbussystem angebunden. Damit über das Informationszugbussystem ebenfalls wagenselektiv auf herausgegriffene Rechnerknoten zugegriffen werden kann, werden die über die Zugtaufe ermittelten Ordnungsnummern der Wagen wie auch die übrigen Informationen über die Zugzusammensetzung an den Server des Informationszugbussystems weitergegeben. Dies erfolgt, indem der Inhalt der Datenbasis über die Zugzusammensetzung an den Server des Informationszugbussystems übergeben wird. Über diesen werden dann die zu verwendenden IP-Adressen für den Zugriff auf einzelne wagenweise zu unterscheidende Rechnerknoten in der Weise angepasst, dass eine eindeutige Zuordnung zwischen der IP-Adresse und der Position des zugehörigen Wagens mit seinem daran fest installierten Rechnerknoten besteht. Das Informationssystem kann somit gezielt Funktionen der Fahrgastinformation, der Fahrgastunterhaltung, einer Sitzplatzreservierung und Internetanbindung erfüllen.

## Patentansprüche

1. Verfahren zum Betreiben eines Kommunikationssystems für Züge mit einem Steuerungszugbussystem, dem insbesondere Übertragungsfunktionen für die Steuerung und Regelung im Zug zugeordnet sind und das im Übrigen über die Funktionsmerkmale der Zugtaufe verfügt, sowie einem Informationszugbussystem für allgemeine Informationsübertragungen, **dadurch gekennzeichnet, dass** an dem Steuerungszugbussystem eine Zugtaufe durchgeführt wird, aus der eine Zusammensetzung insbesondere in Bezug auf eine Anzahl, eine Reihenfolge und eine Einstellrichtung von Wagen und mit diesen Wagen fest verbundenen Rechnerknoten des Steuerungszugbussystems hervorgeht, und dass die solcherart ermittelten Informationen über die Zusammensetzung der Wagen an das Informationszugbussystem weitergegeben werden und an diesem zu einer Bildung von dynamisch modifizierten Adressen für die ebenfalls fest mit den Wagen verbundenen Rechnerknoten des Informationszugbussystems genutzt werden.

2. Verfahren zum Betreiben eines Kommunikationssystems für Züge nach Anspruch 1, **dadurch gekennzeichnet, dass** das Informationszugbussystem auf einer Verwendung der TCP/IP-Technologie beruht, wobei eine wagenselektive Adressierung dadurch erreicht wird, dass mit den vom Steuerungszugbussystem gelieferten Informationen über die Zusammensetzung der Wagen die IP-Adressen der Rechnerknoten des Informationssystems wagenpositionsabhängig gebildet und/oder modifiziert werden.

3. Verfahren zum Betreiben eines Kommunikationssystems für Züge nach Anspruch 2, **dadurch gekennzeichnet, dass** die IP-Adressen der Rechnerknoten des Informationssystems zusammen mit den aus der Zugtaufe erhaltenen Informationen über die Zusammensetzung der Wagen in einer Datenbasis zur Zugkonfiguration aufgenommen werden.

## Claims

1. A method for operating a communications system for trains, with a control train bus system that is assigned, in particular, transmission functions for control and regulating processes in the train and also has the ability to carry out christenings, and with an information train bus system for transmitting general information, **characterized in that** the control train bus system carries out a christening that reveals the configuration, in particular, with respect to the number, sequence and orientation of the railway cars, as well as the computer junctions of the control train bus system that are rigidly connected to these railway cars, and **in that** the thusly determined information on the configuration of the railway cars is forwarded to the information train bus system for use in generating dynamically modified addresses for the computer junctions of the information train bus system that are also rigidly connected to the railway cars.

2. The method for operating a communications system for trains according to Claim 1, **characterized in that** the information train bus system is based on the TCP/IP technology, wherein a selective addressing of the respective railway cars is achieved by generating and/or modifying the IP-addresses of the computer junctions of the information system in dependence on the position of the railway cars with the information on the configuration of the railway cars delivered by the control train bus system.

3. The method for operating a communications system for trains according to Claim 2, **characterized in that** the IP-addresses of the computer junctions of the information system are recorded in a train configuration database together with the information on the configuration of the railway cars obtained from the christening.

## Revendications

1. Procédé de fonctionnement d'un système de communication pour trains comportant un système de bus de train de commande, auquel sont associées notamment des fonctions de transmission pour la commande et la régulation dans le train et qui du reste dispose des caractéristiques fonctionnelles de l'immatriculation du train, ainsi qu'un système de bus de train d'information pour les transmissions d'informations générales, **caractérisé en ce qu'**on réalise sur le système de bus de train de commande une immatriculation de train dont découle une composition notamment relativement à un nombre, un ordre et un sens de mise en place de wagons et des nodules calculateurs reliés fixement à ces wagons du système de bus de train de commande, et que les informations déterminées de cette manière sur la composition des wagons sont communiquées au système de bus de train d'information et sont utilisées dans celui-ci pour constituer des adresses modifiées dynamiquement pour les nodules calculateurs du système de bus de train d'information reliés également fixement aux wagons.

2. Procédé de fonctionnement d'un système de communication pour trains selon la revendication 1, **caractérisé en ce que** le système de bus de train d'information repose sur une utilisation de la technologie TCP/IP, un adressage sélectif des wagons étant obtenu en constituant et/ou en modifiant les adresses IP des nodules calculateurs du système d'information en fonction de la position des wagons avec les informations fournies par le système de bus de train de commande sur la composition des wagons.

3. Procédé de fonctionnement d'un système de communication pour trains selon la revendication 2, **caractérisé en ce que** les adresses IP des nodules calculateurs du système d'information sont intégrées avec les informations issues de l'immatriculation de train sur la composition des wagons dans une base de données pour la configuration du train.
